# EUROPEAN PATENT APPLICATION

(11) **EP 2 296 344 A1**
(43) Date of publication of application: **16.03.2011**
(21) Application number: 10174663.4
(22) Date of filing: 31.08.2010
(51) Int. Cl.: H04L 29/08

(54) **Method for accessing to external site for each country and mobile communication terminal using the same**

(30) Priority: 13.09.2009 KR 20090086205
(71) Applicant: SAMSUNG ELECTRONICS CO., LTD., Suwon-si, Gyeonggi-do (KR)
(72) Inventor: Choi, Jae-won, Seoul (KR); Kim, Dong-sung, Gyeonggi-do (KR); Lee, Yoong-hee, Gyeonggi-do (KR); Lee, Heui-jin, Gyeonggi-do (KR); Lee, Nam-geol, Seoul (KR)
(74) Representative: Jenkins, Richard Gavin

(57) **Abstract**

A method for accessing to an external site and a mobile communication terminal using the same to gain access to a site according to a country of the user. According to the method for accessing to an external site, a mobile communication terminal automatically accesses an external site which provides a service for a particular country corresponding to country information extracted from memory such as a subscriber identification card. A user can access a site which provides a service for his or her country, often in the primary language used the user's country, simply by use of their mobile communication terminal, without performing an additional operation for selecting a country.

## Description

### CLAIM OF PRIORITY

This application claims the benefit of priority under 35 U.S.C. § 119 from Korean Patent Application No. 10-2009-86205, filed on September 13, 2009, in the Korean Intellectual Property Office, the disclosure of which is incorporated herein by reference in its entirety.

### BACKGROUND OF THE INVENTION

### 1. Field of the Invention

The present invention relates to a method for accessing to an external site and a mobile communication terminal for use with the same. More particularly, the present invention relates to a method for accessing an external site for use of a service provided for each country and a mobile communication terminal using the same.

### 2. Description of the Related Art

Recently, multinational companies provide the various countries in which they do business with corporate services, that include access to Internet sites to request and obtain many of such services. Accordingly, the same service is provided to each of the various countries in which they do business through Internet sites or mobile service sites. In this case, a user should access to a site by selecting a desired country service or inputting an address of the site corresponding to his or her country in order to obtain a desired service for the country.

If a user accesses an Internet service using a cellular phone, the user typically has to perform a number of processes just to select a desired country service and thus pays connection expenses for these services.

User's of such services want and would benefit by the ability to access a desired country's service with a minimal amount of processes and expenses to receive such services. Therefore, there is a need in the art for methods that allows a user, particular a user of a mobile communication terminal, the ability to access a site which provides a service for his or her country easily.

### SUMMARY OF THE INVENTION

The present invention provides a method for accessing an external site which provides a service for a country corresponding to country (national) information extracted from a subscriber identification card, and a mobile communication terminal using the same.

In another exemplary aspect of the invention. a method for a mobile communication terminal having a memory with a subscriber identification module containing information to gain access to an external site over a network, the method comprising:
extracting country information from the subscriber identification module; and accessing an external site which provides a service corresponding to a country identified in the extracted country information.

According to an exemplary embodiment of the present invention, there is provided a method that a mobile communication terminal having a subscriber identification card to provide access to an external site, the method including extracting country information from the subscriber identification card; and accessing an external site which provides one or more services associated with a particular country corresponding to the extracted country information.

According to another exemplary aspect of the present invention, the accessing may preferably include generating an address of an external site corresponding to the country information identified in the extracted country information; and accessing the external site which provides a service for the country using the generated address.

According to yet another exemplary aspect of the present invention, the address may also preferably include, for example, a domain name or a uniform resource locator (URL) having an Internet Protocol (IP) address of an external site which provides a service for the particular country identified in the extracted information.

According to still another exemplary aspect of the present invention, the accessing may also preferably include transmitting a request for accessing an external site and the extracted country information associated with the external site; receiving an address of an external site corresponding to the country information from the external site; and accessing the external site which provides a service for the country using the received address.

According to still another exemplary aspect of the present invention, the transmitting request may preferably transmit the request for accessing an external site and the extracted country information to the external site only when initially requesting access to the external site.

According to still another exemplary aspect of the present invention, the transmitting request may preferably transmit the request for accessing an external site and the extracted country information to the external site whenever the external site is about to be or is in the process of being accessed.

According to an exemplary aspect of the present invention, the subscriber identification card may include a any type of card, including but in no way limited to a subscriber identity module (SIM) card or a universal subscriber identity mobile (USIM) card.

According to an exemplary aspect of the present invention, the identification module does not have to be resident on a SIM card and can be stored in a memory of the mobile communication device or provided by the service provider.

According to an exemplary aspect of the present invention, the extracting of country information may preferably including extract the country information from international mobile subscriber identity (IMSI) of the SIM card or the USIM card. In addition, it is possible that more than one country, for example, a primary and a secondary are identified. In addition, the country information may include a mobile country code (MCC).

In another exemplary embodiment of the invention a mobile communication terminal, comprises:
a connection unit to which a storage medium having subscriber identification thereon storage is coupled thereto; a communication unit which is coupled with an external site via a network so that the external site is accessed by the communication unit; and a controlling unit which controls the communication unit to extract country information from the subscriber identification information for accessing a particular version of the external site providing a service for a country corresponding to the extracted country information.

According to another exemplary embodiment of the present invention, there is provided a mobile communication terminal, including a connection unit to which a subscriber identification card is mounted; a communication unit which is connected to an external site for the communication unit to obtain accesses to the external site; and a controlling unit for controlling the communication unit to extract country information from the subscriber identification card and to access to an external site providing a service of a country corresponding to the extracted country information.

According to an exemplary aspect of the present invention, the controlling unit may preferably generate an address of an external site corresponding to the country information using the extracted country information, and access the external site which provides a service for the country using the generated address.

According to another exemplary aspect of the present invention, the address may preferably include a domain name or a uniform resource locator (URL) having an Internet Protocol (IP) address of an external site which provides a service for the country.

According to yet another exemplary aspect of the present invention, the control unit may control the communication unit to transmit a request for accessing to an external site and the extracted country information to the external site, to receive an address of the external site corresponding to the country information from the external site, and to access the external site that provides a service for the country using the address.

According to still another exemplary aspect of the present invention, the controlling unit may preferably control the request for accessing an external site and the extracted country information to be transmitted to the external site only when initially accessing to the external site.

According to even another exemplary aspect of the present invention, the controlling unit may control the request for accessing an external site and the extracted country information to be transmitted to the external site whenever accessing to the external site.

In addition, the subscriber identification card may include a subscriber identity module (SIM) card or a universal subscriber identity mobile (USIM) card.

Moreover, the controlling unit may extract the country information from international mobile subscriber identity (IMSI) of the SIM card or the USIM card. Moreover, the country information could be preloaded in the phone in a memory or module in lieu of or in addition to storage on a IMSI or SIM card, and the country information can be updated or confirmed by a user, and/or defaults changed by a user as desired.

The country information may preferably include a mobile country code (MCC).

### BRIEF DESCRIPTION OF THE DRAWINGS

The above and/or other exemplary aspects of the present invention will become more apparent by describing certain exemplary embodiments of the present invention with reference to the accompanying drawings, in which:

FIG. 1 is a schematic view illustrating a mobile communication terminal and an application providing server according to an exemplary embodiment of the present invention;

FIG. 2 is a block diagram illustrating a mobile communication terminal according to an exemplary embodiment of the present invention;

FIG. 3A is a flowchart provided to explain a method that a mobile communication terminal accesses to an external site when the mobile communication terminal generates a site address according to an exemplary embodiment of the present invention;

FIG. 3B is a view provided to further explain the method shown in FIG. 3A, according to an exemplary embodiment of the present invention;

FIG. 4A is a flowchart provided to explain a method that a mobile communication terminal accesses to an external site when the mobile communication terminal receives a generated address from the external site according to another exemplary embodiment of the present invention;

FIG. 4B is a view provided to further explain the method shown in FIG. 4A, according to another exemplary embodiment of the present invention;

FIG. 5 is a view illustrating the operation of inputting a command for accessing to an external site according to an exemplary embodiment of the present invention; and

FIG. 6 shows a screen of accessing to a site which provides a service for United States of America (USA) when a subscriber identity module (SIM) card stores "USA" as country information according to an exemplary embodiment of the present invention; and

FIG. 7 shows a screen of accessing to a site which provides a service for Korea when a subscriber identity module (SIM) card stores "Korea" as country information according to another exemplary embodiment of the present invention.

### DETAILED DESCRIPTION

Certain exemplary embodiments of the present invention will now be described in greater detail with reference to the accompanying drawings so as to aid a person of ordinary skill in the art to understand and practice the claimed invention without undue experimentation.

In the following description, the same drawing reference numerals are used for the same elements even in different drawings. The matters defined in the description, such as detailed construction and elements, are provided to assist the person of ordinary skill in the art with a comprehensive understanding of the invention. Thus, it is apparent that the present invention can be carried out without those specifically defined matters. Also, well-known functions or constructions may not be described in detail when they might obscure appreciation of the present invention by the person of ordinary skill in the art with unnecessary detail about such well-known functions or constructions.

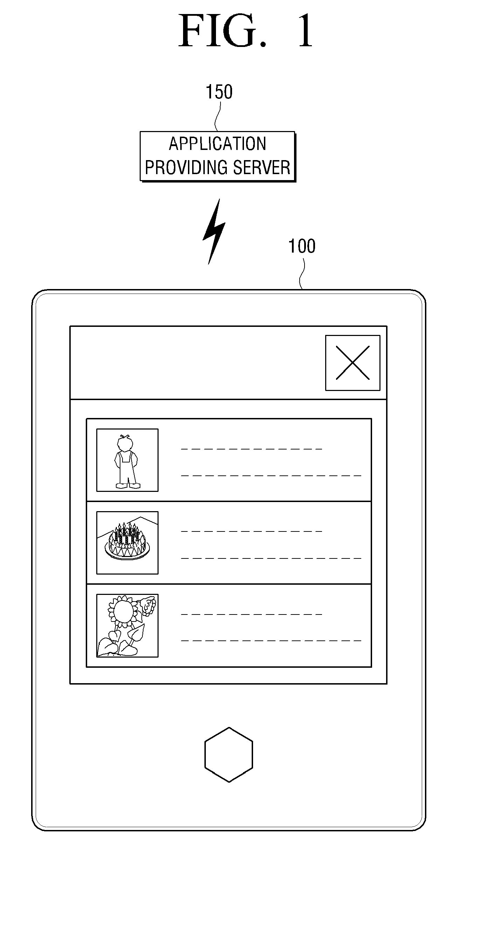

FIG. 1 is a schematic view illustrating a mobile communication terminal 100 and an application providing server 150 according to an exemplary embodiment of the present invention.

Referring now to FIG. 1, the mobile communication terminal 100 is connected to the application providing server 150 and receives a list of applications and application data. Although the drawing shows a direct connection to the server, a person of ordinary skill in the art understands and appreciates that it is within the spirit of the invention and the scope of the appended claims that the mobile communication terminal could be in communication with a proxy server that provides a gateway for access (or provides some of the commonly used services for load balancing) or could be in communication with a base station or other type of intermediary entity that relays the information to the application server.

The mobile communication terminal 100 is connected to the application providing server 100 via Internet or mobile communication network. The mobile communication terminal 100 may use application download services provided by the application providing server 150.

More specifically, the mobile communication terminal 100 displays a site being provided by the application providing server 150 typically through a wireless application protocol (WAP) browser. The WAP is an open international standard for application-layer network communications in a wireless-communication environment to execute Internet communication provided from a mobile communication terminal or application provided from a computer. Accordingly, the mobile communication terminal 100 is connected through or to the application providing server 150 using the WAP, and accesses to a site provided by the application providing server 150.

The application providing server 150 may provide the mobile communication terminal 100 with application. The application providing server 150 may provide a link to a site or host a site for each country to provide the same service. For example, the application providing server 150 may provide a link to a site or host a site to provide a service for USA, Korea, and Japan, respectively. The site for USA may be implemented to provide an application written in English, the site for Korea may be implemented to provide an application written in Korean and English, and the site for Japan may be implemented to provide an application written in Japanese, just as possible non-limiting examples.

As described above, the application providing server 150 provides links to sites and/hosts sites for various countries to provide the same service.

The mobile communication terminal 100 extracts country information from a subscriber identification card. The mobile communication terminal 100 accesses an external site which provides a country service corresponding to the country information extracted from the subscriber identification card. Herein, the external site represents a site in which the application providing server 150 provides a service or link for each country.

The subscriber identification card represents a card which stores subscriber information of the mobile communication terminal 100. The subscriber identification card preferably includes a subscriber identity module (SIM) card and/or a universal subscriber identity mobile (USIM) card. In the case of non-SIM phones, this information may be stored in the memory of the phone itself.

The SIM card comprises a card inserted into a group special mobile (GSM) communication terminal to identify a user. The SIM card stores subscriber information. Accordingly, a user may use/personalize the mobile communication terminal 100 under his or her ownership by inserting his or her own SIM card into the mobile communication terminal 100.

The USIM card, which is a user identification card for a Wideband Code Division Multiple Access (W-CDMA) mobile communication terminal, may be referred to as a UIM card. The USIM card is based on a SIM card used in a GSM communication terminal.

The mobile communication terminal 100 may automatically access an external site which provides a country (national) service corresponding to country information extracted from the subscriber identification card. Accordingly, according to the present invention, a user may access a site which provides a service for his or her country using the mobile communication terminal 100 without an additional operation for selecting his or her country.

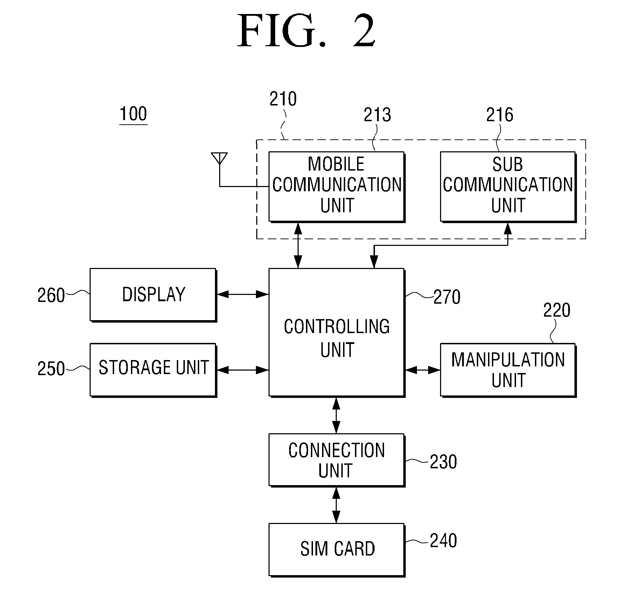

FIG. 2 is a block diagram illustrating the mobile communication terminal 100 according to an exemplary embodiment of the present invention.

Referring now to FIG. 2, the mobile communication terminal 100 preferably comprises a communication unit 210, a manipulation unit 220, a connection unit 230, a SIM card 240, a storage unit 250, a display 260, and a controlling unit 270. A person of ordinary skill in the art understands and appreciates that the mobile communication terminal could be provided without a SIM card, that is separately or subsequently inserted by a user to permit certain functionality to the mobile communication terminal. Also, some mobile communication terminals could have a memory or portion thereof set aside (dedicated) to store and or update the information on a SIM card.

The communication unit 210 is connected to an external site over mobile communication network or Internet so that the communication unit 210 is accesses the external site. The communication unit 210 preferably comprises a mobile communication unit 213 and a sub-communication unit 216.

The mobile communication unit 213 is in communication with the application providing server 150 over a mobile communication network. Herein, the mobile communication network may comprise, for example, a GSM communication network or a WCDMA communication network.

The sub-communication unit 216 is connected to the application providing server 150 over the Internet for communication with each other. The sub-communication unit 216 may be implemented using a wireless local area network (WLAN).

The manipulation unit 220, which may comprise a keypad, touch screen, or an input device such as a mouse or joystick, stylus, etc., receives user's manipulation and transmits it to the controlling unit 270. In more detail, a user operates the manipulation unit 220 in order to access a site or to select an application. The manipulation unit 220 may include buttons or a touchscreen provided on the mobile communication terminal 100.

The connection unit 230 comprises an interface having a slot into which a subscriber identification card is inserted. Specifically, the connection unit 230 comprises an intermediate element that couples the controlling unit 270 with the SIM card 240. The controlling unit 270 establishes or terminates a session with the SIM card 240 through the connection unit 230, stores information in the SIM card 240, and reads information stored in the SIM card 240.

The SIM card 240 comprises a small chip card which is mounted on the mobile communication terminal 100 of a GSM scheme to identify a user. The SIM card 240 stores subscriber information, and the subscriber information includes information regarding a country. Specifically, the SIM card 240 stores subscriber information using international mobile subscriber identity (IMSI). The IMSI includes country information which is typically represented as a mobile country code (MCC). For example, the MCC for Korea is 450, the MCC for Japan is 440, 441, and the MCC for USA is 310 to 316.

The SIM card 240 is used for the subscriber identification card in this exemplary embodiment of the present invention, but the USIM card may also be used. Again, there are mobile communication devices that may have a memory in lieu of the SIM or USIM card that stores the pertinent information regarding country or country codes. This memory could be part of the storage unit 250 or a separate memory module.

The storage unit 250 stores programs to execute various operations of the mobile communication terminal 100. The storage unit 250 may store, for example, application programs received from the application providing server 150. The storage unit 250 may be implemented using a hard disc drive, a non-volatile memory, and so on.

The display 260 displays an image to show operations of the mobile communication terminal 100. The display 260 displays sites provided by the application providing server 150 on a screen. The display 260 displays a graphical user interface (GUI) to enable a user to operate the mobile communication terminal 100 on a screen. The display may comprised be a touch screen, in which case the manipulation unit and display could be a single entity, or might permit touching the screen for some functions but pushing/pressing buttons for other functions (or providing the user with a choice as to whether they wish to touch the screen or use the keypads as opposed to a virtual keypad).

The controlling unit 270 controls overall operations of the mobile communication terminal 100. The controlling unit 270 extracts country information from the SIM card 240, and controls the communication unit 210 so that the mobile communication terminal 100 accesses an external site which provides a service corresponding to the extracted country.

Specifically, the SIM card 240 stores information regarding a subscriber such as an IMSI. The IMSI includes country information using an MCC. Accordingly, the controlling unit 270 obtains information regarding a subscriber's country from the SIM card 240 by extracting the MCC included in the IMSI of the SIM card 240.

The controlling unit 270 generates an address of a corresponding external site using the extracted country information, and accesses the external site which provides a service corresponding to the country using the generated address. In more detail, the controlling unit 270 may directly generate a site address for each country to provide a specific service provided by the application providing server 150. The site address may comprise a domain name, or may comprise a uniform resource locator (URL) having an Internet Protocol (IP) address of an external site which provides a service for a corresponding country. For example, if a domain name of the application providing server 150 is "Astore," the controlling unit 270 generates an address of a site, "www.Astore.com," which provides a service for USA, an address of a site, "www.Astore.co.kr," which provides a service for Korea, and an address of a site, "www.Astore.co.jp," which provides a service for Japan.

Alternatively, the controlling unit 270 may receive a site address corresponding to a specific country from the application providing server 150, and access an external site which provides a service corresponding to the specific country using the received site address, instead of generating a site address of a specific country. Specifically, the request for accessing an external site and the extracted country information are transmitted to the external site under the control of the controlling unit 270. The controlling unit 270 receives an address of an external site corresponding to the country information from the external site in response to the request for access to the external site. The controlling unit 270 controls the communication unit 210 to access an external site which provides a corresponding country service using the received address.

For example, the controlling unit 270 transmits the request for accessing a site providing an application service and country information regarding Korea to the application providing server 150. The application providing server 150 transmits a site address for Korea, that is, "www.Astore.co.kr" to the mobile communication terminal 100. Accordingly, the controlling unit 270 receives a site address, "www.Astore.co.kr," and accesses the site "www.Astore.co.kr."

The controlling unit 270 may directly generate a site address corresponding to the extracted country information, or may also receive a generated address from an external site.

As described above, the mobile communication terminal 100 may automatically access an external site which provides a country service corresponding to country information extracted from a subscriber identification card. Accordingly, a user may access a site, which provides a service for his or her country, using the mobile communication terminal 100 without an additional operation for selecting his or her country.

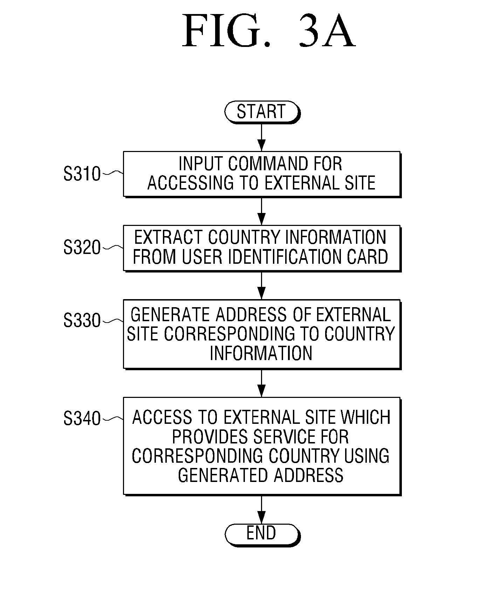

Herein below, a method by which the mobile communication terminal 100 accesses an external site will be explained with reference to FIGS. 3A to 4B.

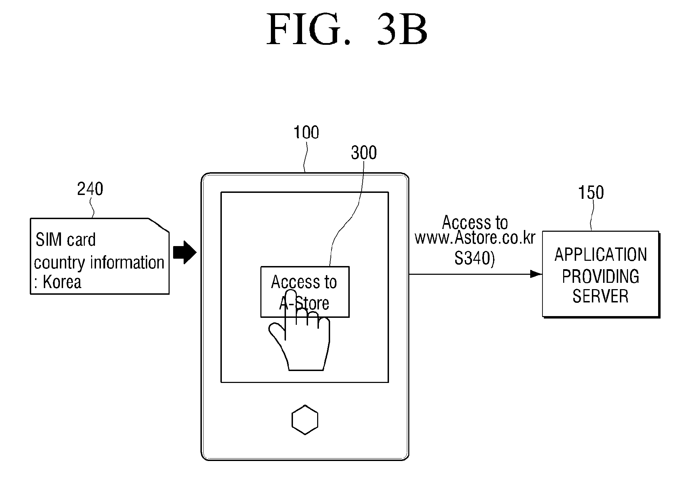

FIG. 3A is a flowchart to provided an operational overview of an exemplary method of the present invention. In this exemplary method, the mobile communication terminal 100 accesses an external site when the mobile communication terminal 100 generates a site address. FIG. 3B is a view provided for further explanation of the method shown in FIG. 3A, according to an exemplary embodiment of the present invention.

Now referring to FIG. 3A, the mobile communication terminal 100 receives a command for accessing an external site from a user via the manipulation unit 220 (S310). For example, if a user touches an icon 300 to gain access to an external site, as shown in FIG. 3B, the mobile communication terminal 100 receives a command for accessing an external site.

The mobile communication terminal 100 extracts the country information from a user identification card (S320) or storage in the case where the mobile communication unit does not have a SIM card of USIM card. Herein, the user identification card may preferably comprise either the SIM card 240 or the USIM card. Specifically, the SIM card 240 and the USIM card store subscriber information using IMSI. The IMSI includes country information using an MCC. Accordingly, the mobile communication terminal 100 extracts an MCC from the IMSI of the SIM card 240 and the USIM card, and thus obtains country information of a subscriber.

For example, referring to FIG. 3B, "Korea" is registered to the SIM card 240 mounted on the mobile communication terminal 100 as country information. Accordingly, the mobile communication terminal 100 extracts "Korea" as country information.

At (S330), the mobile communication terminal 100 generates an address of an external site corresponding to country information using the extracted country information (S330). Specifically, the mobile communication terminal 100 generates a site address corresponding to the extracted country information for a service to be provided by the application providing server 150. Herein, the site address may be a domain name or a URL having an IP address of an external site which provides a service for a corresponding country. For example, if a domain name of the application providing server 150 is "Astore," the mobile communication terminal 100 generates an address of a site, "www.Astore.com," which provides a service for USA, an address of a site, "www.Astore.co.kr," which provides a service for Korea, and an address of a site, "www.Astore.co.jp," which provides a service for Japan.

Referring again to FIG. 3B, as the country information extracted from the SIM card 240 is "Korea," the mobile communication terminal 100 may generate "www.Astore.co.kr" as an address of a site which provides a service for Korea.

At (S340), the mobile communication terminal 100 accesses an external site which provides a service for a corresponding country using the generated address. In FIG. 3B, the mobile communication terminal 100 accesses the Korea site of the application providing server 150 using the generated address, "www.Astore.co.kr."

The mobile communication terminal 100 may directly generate a site address for each country.

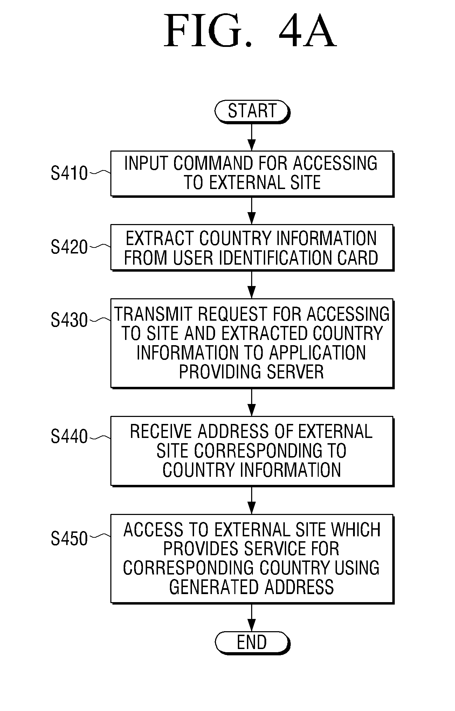

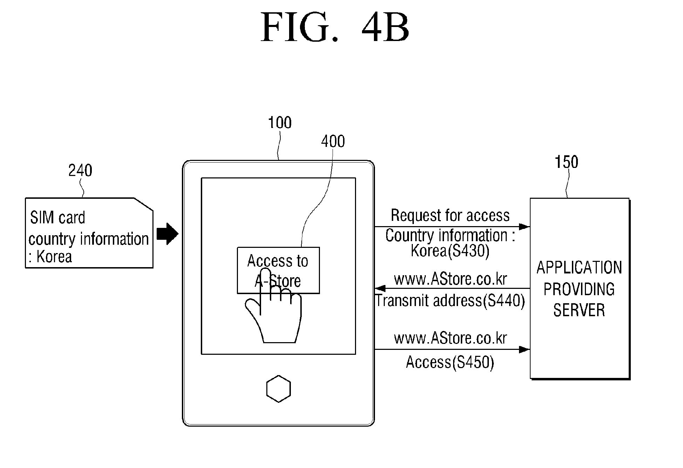

Herein below, an exemplary method for receiving a site address for each country from an external site will be explained with reference to FIGS. 4A and 4B. FIG. 4A is a flowchart provided to explain a method that the mobile communication terminal 100 accesses to an external site when the mobile communication terminal 100 receives a generated address from the external site according to another exemplary embodiment of the present invention. FIG. 4B is a view provided to further explain the method shown in FIG. 4A, according to another exemplary embodiment of the present invention.

The mobile communication terminal 100 receives a command for accessing an external site from a user using the manipulation unit 220 (S410). For example, if a user touches an icon 400 to gain access to an external site, as shown in FIG. 4B, the mobile communication terminal 100 receives a command for accessing the external site.

The mobile communication terminal 100 then extracts country information from a subscriber identification card (S420). Herein, the subscriber identification card may be the SIM card 240 or the USIM card, or an area of storage containing this information. Specifically, the SIM card 240 and the USIM card store subscriber information using the IMSI. The IMSI includes country information using an MCC. Accordingly, the mobile communication terminal 100 may obtain information regarding a subscriber's country by extracting an MCC included in the IMSI of the SIM card 240 and the USIM card.

For example, referring to FIG. 4B, "Korea" is registered to the SIM card 240 mounted on the mobile communication terminal 100 as country information. Accordingly, the mobile communication terminal 100 extracts "Korea" as country information.

With continued reference to FIG. 4A, the mobile communication terminal 100 transmits the request for accessing a site and the extracted country information to the application providing server 150 (S430). The application providing server 150 generates a site address to provide a service for a country corresponding to the received country information. For example, if a domain name of the application providing server 150 is "Astore" the application providing server 150 generates an address of a site, "www.Astore.com," which provides a service for USA, an address of a site, "www.Astore.co.kr," which provides a service for Korea, and an address of a site, "www.Astore.co.jp," which provides a service for Japan.

The application providing server 150 transmits the generated address to the mobile communication terminal 100. The mobile communication terminal 100 receives the address of an external site corresponding to the country information from the application providing server 150 (S440).

Referring to FIG. 4B, the mobile communication terminal 100 transmits the request for accessing a site and the country information regarding "Korea" to the application providing server 150 (S430). Since the country information received from the SIM card 240 is "Korea," the application providing server 150 may generate a site address to provide a service for Korea to be "www.Astore.co.kr." The application providing server 150 may transmit the generated site address, "www.Astore.co.kr" to the mobile communication terminal 100 (S440).

The mobile communication terminal 100 gains accesses to the external site which provides a service for a corresponding country by using the generated address (S450). Referring to FIG. 4B, the mobile communication terminal 100 accesses to the Korea site of the application providing server 150 using the generated address, "www.Astore.co.kr."

As described above, the mobile communication terminal 100 may receive a site address for each country from an external site.

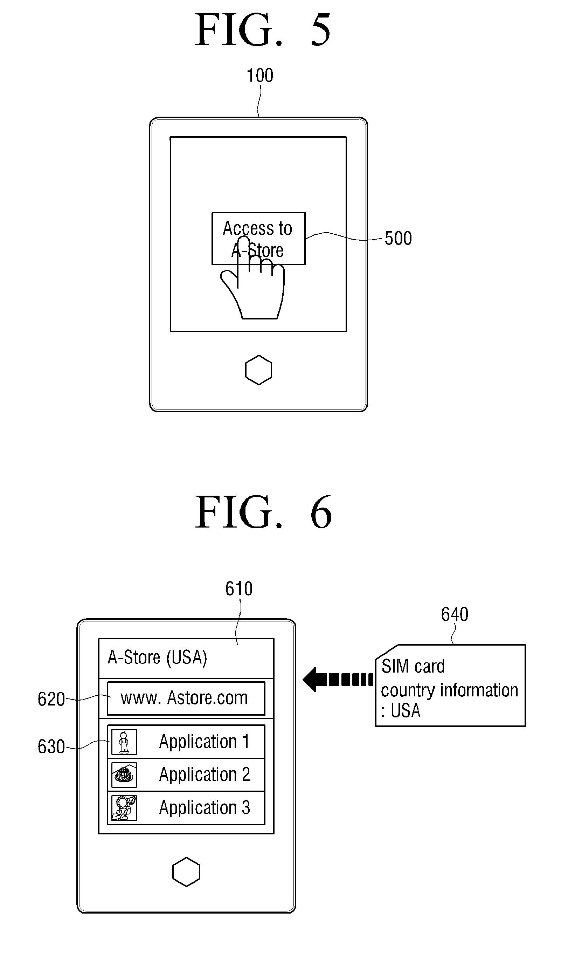

Hereinbelow, screens for accessing a site to provide application for each country will be explained with reference to FIGS. 5 to 7. FIG. 5 is a view illustrating the operation of inputting a command for accessing to an external site according to an exemplary embodiment of the present invention.

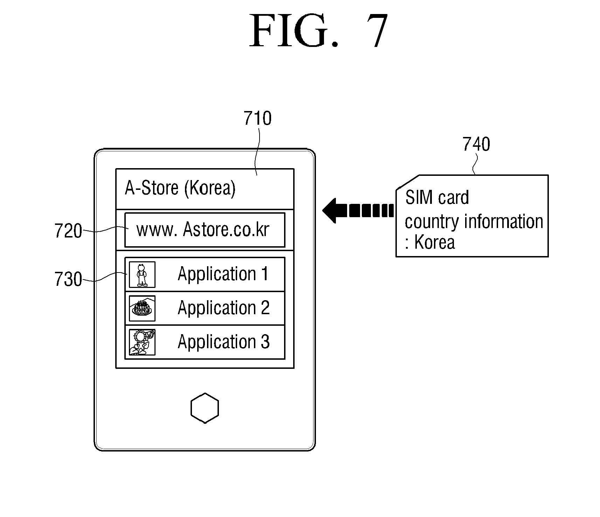

If a user touches an icon 500 to gain access to an external site displayed on a screen of the mobile communication terminal 100, as shown in FIG. 5, the mobile communication terminal 100 attempts to access the external site. The mobile communication terminal 100 may display a site to provide the application on the screen, as shown in FIG. 6 or 7.

FIG. 6 shows a screen of accessing to a site which provides a service for USA when a SIM card 640 stores "USA" as country information according to an exemplary embodiment of the present invention. Referring again to FIG. 6, a USA site of "A-Store" to provide an application service includes a name display area 610, an address display area 620, and application lists 630.

As shown in FIG. 6, "USA" is registered to the SIM card 640 mounted on the mobile communication terminal 100 as country information. Accordingly, "A-Store" of a site name and "USA" of country information are displayed on the name display area 610, and "www.Astore.com" of a site address for USA is displayed on the address display area 620. In addition, the application lists 630 are provided in English.

FIG. 7 shows a screen of accessing to a site which provides a service for Korea when a SIM card 740 stores "Korea" as country information, according to another exemplary embodiment of the present invention. Referring to FIG. 7, a Korea site of "A-Store" to provide an application service includes a name display area 710, an address display area 720, and application lists 730.

As shown in FIG. 7, "Korea" is registered to the SIM card 740 mounted on the mobile communication terminal 100 as country information. Accordingly, "A-Store" of a site name and "Korea" of country information are displayed on the name display area 710, and "www.Astore.co.kr" of a site address for Korea is displayed on the address display area 720. In addition, the application lists 730 are provided in Korean.

As described above, a user may access a site of his or her country by touching only the icon 500 to access to an external site.

In this exemplary embodiment of the present invention, an application providing server is a server to provide an external site, but other servers to provide sites for various countries may also be an application providing server.

According to various exemplary embodiments of the present invention, a method for automatically accessing to an external site which provides a service for each country corresponding to country information extracted from a subscriber identification card and a mobile communication terminal using the same are provided. Accordingly, a user may access a site that provides a service for his or her country using a mobile communication terminal without an additional operation for selecting a country.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art. For example, in the United States there are a considerable number of people whose spoken and written language is Spanish, which is not the primary language of the country (i.e. non-primary). The present invention includes that the external site which provides a service corresponding to a country identified in the extracted country information can provides the service in a non-primary language or dialect associated with the identified country, or a language of the user's preference. Thus, a Korean citizen who is visiting China can access the Korean language version of the external site. Similarly, the person who prefers Spanish in the United States can access the Spanish language version of the external site.

## Claims

1. A method that a mobile communication terminal having a subscriber identification card accesses to an external site, the method comprising:
extracting country information from the subscriber identification card (320); and
accessing an external site which provides a service corresponding to the extracted country information (340).

2. The method as claimed in claim 1, **characterized in that** the accessing comprises:
generating an address of an external site corresponding to the country information using the extracted country information (330); and
accessing the external site which provides a service for the country using the generated address (340).

3. The method as claimed in claim 2, **characterized in that** the address includes a domain name or a uniform resource locator (URL) having an Internet Protocol (IP) address of an external site which provides a service for the country.

4. The method as claimed in one of claims 1 to 3, **characterized in that** the accessing comprises:
transmitting a request for accessing to an external site and the extracted country information to the external site (430);
receiving an address of an external site corresponding to the country information from the external site (440); and
accessing an external site which provides a service for the country using the received address (450).

5. The method as claimed in claim 4, **characterized in that** the transmitting transmits the request for accessing an external site and the extracted country information to the external site only when initially accessing to the external site.

6. The method as claimed in claim 4, **characterized in that** the transmitting transmits the request for accessing to an external site and the extracted country information to the external site whenever accessing to the external site.

7. The method as claimed in one of claims 1 to 6, **characterized in that** the subscriber identification card comprises a subscriber identity module (SIM) card (240) or a universal subscriber identity mobile (USIM) card.

8. The method as claimed in claim 7, **characterized in that** the extracting extracts the country information from international mobile subscriber identity (IMSI) of the SIM card (240) or the USIM card.

9. The method as claimed in one of claims 1 to 8, **characterized in that** the country information comprises a mobile country code (MCC).

10. A mobile communication terminal, comprising:
a connection unit (230) to which a subscriber identification card (240) is mounted;
a communication unit (210) which is connected to an external site so that the communication unit accesses the external site; and
a controlling unit (270) which controls the communication unit (210) to extract country information from the subscriber identification card (240) and to access to an external site providing a service of a country corresponding to the extracted country information.

11. The mobile communication terminal as claimed in claim 10, **characterized in that** the controlling unit (270) generates an address of an external site corresponding to the country information using the extracted country information, and accesses to the external site which provides a service for the country using the generated address.

12. The mobile communication terminal as claimed in claim 11, **characterized in that** the address includes a domain name or a uniform resource locator (URL) having an Internet Protocol (IP) address of an external site which provides a service for the country.

13. The mobile communication terminal as claimed in claim 10, **characterized in that** the controlling unit (270) controls the communication unit (210) to transmit a request for accessing to an external site and the extracted country information to the external site, to receive an address of the external site corresponding to the country information from the external site, and to access to the external site which provides a service for the country using the address.

14. The mobile communication terminal as claimed in claim 13, **characterized in that** the controlling unit (270) causes the request for accessing to an external site and the extracted country information to be transmitted to the external site only when initially accessing to the external site.

15. The mobile communication terminal as claimed in claim 13, **characterized in that** the controlling unit (270) causes the request for accessing to an external site and the extracted country information to be transmitted to the external site whenever accessing to the external site.
